# NOUVEAU FASCICULE DE BREVET EUROPEEN

(11) **EP 0 736 115 B2**
(45) Date de publication et mention de la décision concernant l'opposition: **12.04.2006**
(45) Mention de la délivrance du brevet: 05.08.1998
(21) Numéro de dépôt: 95935976.1
(22) Date de dépôt: 18.10.1995
(51) Int. Cl.: D04H 18/00, D04H 13/00

(54) **PROCEDE DE REALISATION D'UN SUBSTRAT FIBREUX PAR SUPERPOSITION DE COUCHES FIBREUSES ET SUBSTRAT AINSI OBTENU**
VERFAHREN ZUR HERSTELLUNG EINES FASERSUBSTRATS DURCH UEBERLAGERUNG VON FASERSCHICHTEN UND SO ERHALTENE SUBSTRAT
METHOD OF PRODUCING A FIBROUS SUBSTRATE BY SUPERIMPOSING FIBROUS LAYERS AND SUBSTRATE SO OBTAINED

(30) Priorité: 20.10.1994 FR 9412764
(43) Date de publication de la demande: 09.10.1996
(73) Titulaire: MESSIER BUGATTI, 78140 Velizy Villacoublay (FR); Société Nationale d'Etude et de Construction de Moteurs d' Aviation -SNECMA-, 75015 Paris (FR)
(72) Inventeur: DUVAL, Renaud, Jean, Raymond, Roger, F-69270 Couzon-au-Mont-d'Or (FR); CULLERIER, Jean-Louis, Maurice, F-33200 Bordeaux-Cauderan (FR); PIRODON, Jean-Pascal, F-69230 Saint-Genis-Laval (FR)
(74) Mandataire: Joly, Jean-Jacques
(86) Numéro de dépôt international: PCT/FR1995/001370
(87) Numéro de publication internationale: WO 1996/012842

(56) Documents cités:
- EP-A- 0 424 988
- EP-A- 0 695 823
- GB-A- 1 308 999
- US-A- 4 790 052

## Description

### DOMAINE TECHNIQUE:

La présente invention est relative au domaine de la réalisation de substrats fibreux, à partir de couches fibreuses qui sont superposées et successivement aiguilletées.

L'invention concerne plus spécifiquement les structures fibreuses à partir de fibres précurseurs de fibres de carbone.

### TECHNIQUE ANTERIEURE :

La technique de fabrication de tels substrats fibreux consiste à les réaliser par superposition de nappes qui possèdent une tenue propre permettant leur superposition en couches successives.

L'obtention d'un substrat fibreux consiste à placer en superposition plusieurs nappes et à les lier notamment par aiguilletage selon des conditions déterminées en fonction de l'application envisagée.

Cette méthode conduit à un substrat fibreux plus ou moins dense qui peut ensuite faire l'objet d'opérations de découpage pour obtenir une ou des préformes propres à subir ultérieurement des opérations de carbonisation, de densification, de traitement thermique et de finition.

Cette technique de constitution d'un substrat fibreux est bien connue et l'appareillage pour la mise en oeuvre comprend, dans un mode de fabrication, une table dite d'aiguilletage destinée à supporter les couches ou nappes successives superposées. La table est placée à l'aplomb d'une tête d'aiguilletage comportant un nombre d'aiguilles à barbes et qui peut être déplacée verticalement pour faire pénétrer les aiguilles dans les couches fibreuses et assurer, par prise en charge et déplacement de certaines des fibres, un aiguilletage perpendiculaire au plan général des nappes superposées.

A titre d'art antérieur, il convient de citer la demande EP 0.232.059 qui prévoit de faire intervenir une profondeur de pénétration constante des aiguilles, mais de déplacer cette profondeur d'une mesure équivalente à l'épaisseur de couches à chaque fois superposées.

Les produits à caractère définitif qui peuvent être obtenus par le procédé ci-dessus peuvent être qualifiés de généralement bons. Il a été constaté toutefois que les produits obtenus ne présentaient une structure homogène et cohérente que lorsqu'une densité d'aiguilletage réelle (DAR) relativement élevée était pratiquée pour lier les nappes successivement superposées. Il peut être considéré qu'une telle DAR élevée est au minimum égale à 1 500. Par densité d'aiguilletage réelle (DAR), il faut entendre une fonction du nombre de barbes d'aiguilles par cm³ vu par une face de la couche ou nappe. (Une telle DAR inclut donc la densité d'aiguilletage par unité de surface, le taux de pénétration en z, le pas de descente, mais aussi les caractéristiques fonctionnelles des aiguilles).

A partir des paramètres ci-dessus, le produit obtenu n'apparait pas toutefois toujours satisfaisant dans le domaine du freinage et, plus particulièrement, dans celui d'un frein du type "puits de chaleur".

En effet, en raison des efforts développés et des températures élevées qui s'établissent lors d'une mise en service d'un tel type de frein, il a été constaté que les disques de freinage présentaient une caractéristique physique pouvant être qualifiée d'inadaptée, au point de n'admettre que peu ou pas ou trop de déformation possible. Dans de telles conditions, il est fréquent de constater que les disques d'un frein du type "puits de chaleur" ne coopèrent pas entre eux par toutes leurs surfaces en vis-à-vis, de sorte que des conditions de freinage inattendues peuvent en résulter.

Il a été préconisé d'améliorer l'adaptation d'un tel produit, en procédant à la réalisation d'un substrat fibreux à base de fibres préoxydées présentant, après carbonisation et densification, un taux de fibres **Tf** inférieur à celui généralement retenu jusqu'à présent et qui est compris entre 29 à 32 % et un taux de fibres en **z Tfz** également inférieur à celui habituel qui est voisin de 6 à 10 %.

Il a été préconisé dans ce sens d'abaisser le taux de fibres **Tf** à une valeur inférieure à 27 % et de retenir un taux de fibres en **z Tfz** voisin de 3 %.

Il a été tenté d'atteindre de tels objectifs en abaissant la densité de liaison, notamment d'aiguilletage, jusqu'à environ 30 coups/cm². Il s'est avéré qu'une telle méthode n'était pas à même de résoudre globalement le problème posé, car la diminution du taux de fibres général pouvant être obtenue par un tel moyen technique est insuffisante pour atteindre l'objectif visé.

Il a été proposé aussi d'aborder la solution du problème posé en choisissant un pas de déplacement relatif, notamment de descente, pour la table d'aiguilletage, par exemple voisin de ou supérieur à 1,6 mm et, en tous cas, légèrement supérieur à l'épaisseur de chaque couche superposée. Des résultats non probants ont été obtenus en agissant sur un tel paramètre uniquement.

Enfin, il a été envisagé d'aborder le problème en changeant la profondeur de pénétration des aiguilles et, par conséquent, la profondeur de liaison en **z**, en passant, par exemple, de 14 mm à 12 mm, mais aucun résultat satisfaisant n'a pu en être tiré.

Il semblerait que des résultats allant dans le sens souhaité pourraient être obtenus, à condition de jouer simultanément sur les trois paramètres ci-dessus. Cependant, à partir des essais qui ont été effectués, il est constaté que le substrat fibreux obtenu, en réduisant simultanément les trois paramètres ci-dessus, possède une structure non homogène faisant apparaître des épaisseurs de couches liées croissant progressivement depuis la ou les premières couches posées sur la table et aiguilletées, jusqu'aux dernières couches superposées. Il semblerait qu'un tel résultat d'hétérogénéité de structure soit dû à une sorte d'effet rebond, matelas ou ressort, provenant de la superposition progressive croissante des couches ou d'épaisseur de couches superposées qui, par réaction élastique lors de la pénétration des aiguilles, conduit à diminuer l'efficacité de ces dernières.

Ainsi, au fur et à mesure de la superposition, les épaisseurs de couches superposées sont moins profondément liées aux couches sous-jacentes et possèdent chacune une épaisseur résiduelle responsable de l'effet rebond.

De tels substrats fibreux ne peuvent pas être utilisés convenablement, même après densification, car l'hétérogénéité de structure d'une face à l'autre modifie le comportement des couches successives aux efforts de freinage et ouvre le risque d'un effet de délamination de couches lors de l'application d'un effort de freinage ou pendant les étapes de fabrication.

Le caractère hétérogène d'un substrat fibreux a déjà été constaté, notamment par le brevet US 4.790.052. Selon cet enseignement, il est préconisé d'accroître pour chaque couche superposée, la distance entre le support de couches et les aiguilles. Il a pu être constaté que pour l'application envisagée, cette technique, donnant par ailleurs des résultats intéressants, ne permet pas de régler le problème posé.

Un procédé pour réaliser un substrat fibreux par superposition de couches et aiguilletage de chaque couche superposée est décrit aussi dans la demande de brevet EP 0 695 823 publiée après la date de dépôt dont bénéficie le présent brevet. La distance entre le support des couches et les aiguilles est augmentée à chaque superposition d'une nouvelle couche, avec un pas de déplacement variable, le but recherché étant de contrôler le taux de fibres transférées de façon permanente par les aiguilles.

### EXPOSE DE L'INVENTION:

L'objet de l'invention vise à proposer un nouveau procédé permettant de répondre à l'objectif initialement posé qui est d'offrir un substrat fibreux qui présente une adaptation de rigidité de surface différente de celle pouvant être obtenue avec les paramètres habituels de liaison, notamment d'aiguilletage, qui soit exempt d'hétérogénéité d'épaisseur de couches et qui soit à même de fournir, après traitements ultérieurs de carbonisation, de densification et de traitement thermique, notamment dans l'application à des disques de frein, des pièces de friction et d'usure offrant une capacité d'auto-adaptation à la contrepartie avec laquelle elles coopèrent lors des applications d'une force de freinage, de manière à garantir une bonne coopération des surfaces maximales d'usure mises en présence.

Les objectifs ci-dessus, sont atteints avec le procédé de la revendication indépendante.

Diverses autres caractéristiques ressortent de la description faite ci-dessous en référence aux dessins annexés qui montrent, à titre d'exemples non limitatifs, des formes de réalisation de l'objet de l'invention.

### BREVE DESCRIPTION DES DESSINS :

La figure **1** est une coupe schématique d'un substrat fibreux conforme à l'invention.
La figure **2** représente, de façon schématique, une machine d'aiguilletage.
La figure **3** est une vue synoptique de différentes courbes de mise en oeuvre du procédé de liaison conforme à l'invention.
La figure **4** est une coupe partielle mettant en évidence une possibilité de l'invention qui n'est pas couverte par les revendications pour DE, GB.

### MEILLEURE MANIERE DE REALISER L'INVENTION:

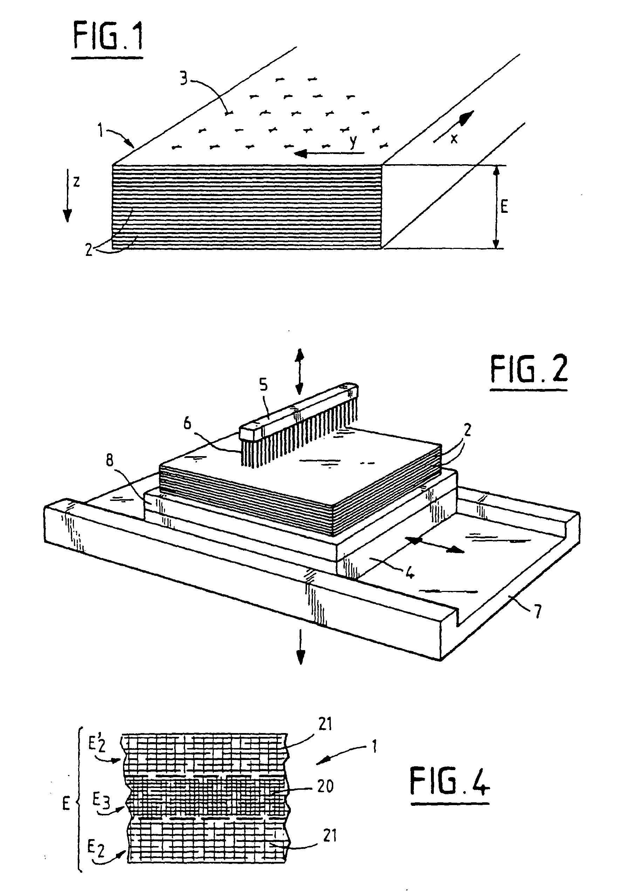

La figure **1** montre un exemple d'un substrat fibreux **1** constitué par une pluralité de couches **2** fibreuses superposées lui conférant une épaisseur **E** et. de préférence, liées les unes aux autres, par exemple, par des points **3,** notamment d'aiguilletage, qui peuvent être considérés comme exécutés selon la direction **z** par rapport aux directions **x-y** du plan de chaque couche **2.** Par couche **2,** on entend toute nappe fibreuse à fibres alignées ou non et pré-aiguilletées ou non, à fibres tissées ou non, à fibres tricotées ou non ou à fibres tressées ou non.

Il doit être considéré que l'invention s'applique à des méthodes de fabrication d'un substrat **1** autre que plan, telles que celles consistant à former un substrat par enroulement cylindrique ou hélicoïdal, plan ou conique, d'une nappe, constituée à partir de fibres précurseurs de fibres de carbone (PAN préoxydé, brai, viscose, phénolique), de fibres de carbone, de fibres céramiques ou de leurs précurseurs et de telles fibres mélangées, qu'elles soient continues ou discontinues et, dans ce dernier cas, elles peuvent aussi provenir du recyclage de chutes de nappes ou substrats.

Pour obtenir un substrat fibreux 1 à partir de couches **2** selon l'exemple de la figure **1,** on procède comme illustré par la figure **2,** dans le cas d'un substrat 1 plan.

Sur un plateau horizontal **4** sont amenées, une par une, des bandes **2** de matériau fibreux de largeur et longueur déterminées en fonction des dimensions de la structure à réaliser. Les bandes **2** sont empilées les unes sur les autres et liées entre elles, par exemple, par aiguilletage au moyen d'une planche à aiguilles 5 située au-dessus du plateau **4.** La planche **5** s'étend parallèlement à l'un des côtés du plateau **4** et sur une longueur sensiblement égale à celle de ce côté, avec des aiguilles **6** dirigées verticalement vers le bas. Les aiguilles **6** sont, par exemple, du type connu sous la référence 15 x 18 x 36 x 3,5 C 333 G 1002. commercialisées par la société Allemande GROZ-BECKERT.

La planche à aiguilles **5** est solidaire d'un dispositif d'entraînement (non représenté) qui, de façon bien connue en soi, communique aux aiguilles un mouvement alternatif vertical.

La planche à aiguilles **5** et l'empilement de bandes **2** sont mobiles l'un par rapport à l'autre en direction horizontale et en direction verticale. Horizontalement, le plateau **4** est par exemple mobile par rapport à une table de support **7,** perpendiculairement à la planche **5,** sous l'action de moyens d'entraînement (non représentés) montés sur la table **7.** Verticalement, le déplacement entre le plateau **4** et la planche **5** est, par exemple, réalisé par entraînement de la table **7** au moyen de vis sans fin ou autre dispositif d'accouplement avec un moteur (non représenté) fixé au bâti de support de la planche à aiguilles.

De préférence, le plateau **4** est recouvert d'un revêtement **8** dans lequel les aiguilles **6** peuvent pénétrer sans dommage sur la profondeur d'aiguilletage prévue lors des premières passes d'aiguilletage.

Le procédé mis en oeuvre consiste à poser sur le plateau **4** une, voire deux couches **2** superposées qui sont liées notamment par aiguilletage, puis ensuite à descendre la table **7** d'un pas d'aiguilletage pour permettre la superposition d'une troisième couche **2** qui est aiguilletée sur les deux autres et ainsi de suite, jusqu'à superposer et aiguilleter le nombre n souhaité de couches **2** pour conférer au substrat fibreux 1 l'épaisseur **E** recherchée.

Dans le cas de fabrication d'un substrat par enroulement sur un mandrin d'une nappe continue, chaque tour de mandrin provoque l'enroulement d'une épaisseur de nappe. Cette épaisseur est à considérer comme l'équivalent d'une couche de l'exemple précédent.

De même, pour chaque enroulement d'une épaisseur, il convient dans un tel cas de déplacer relativement le moyen de liaison transversal pour l'éloigner d'autant du mandrin. Il s'agit là d'un déplacement relatif qui doit être assimilé au pas de descente évoqué dans l'exemple précédent.

De manière que le support 1 se caractérise par une structure homogène faisant intervenir des épaisseurs de couches **2** après aiguilletage, constantes sur toute l'épaisseur **E**, le procédé de l'invention propose de choisir un pas de déplacement relatif entre le moyen de liaison et le support du substrat, variable et de facteur généralement décroissant, au fur et à mesure de la superposition d'épaisseurs de couches **2,** à partir d'un pas de base correspondant sensiblement à l'épaisseur de couche **2** visée après liaison.

Selon une disposition de l'invention et dans l'application selon les figures **1** et **2,** l'adoption d'un pas de déplacement variable s'effectue selon une loi de réduction de ce pas, qui est choisie en fonction de l'objectif à atteindre et des caractéristiques devant être conférées au substrat **1,** telles que le taux de fibres global **Tf,** le taux de fibres en **z Tfz** et l'épaisseur de couches e/c après constitution du support **1.**

Dans une application consistant à produire, à partir de fibres PAN préoxydé, des supports fibreux 1 destinés à être ensuite découpés pour l'obtention de préformes fibreuses devant être soumises à des opérations de carbonisation et de densification ultérieures, en vue de constituer des pièces d'usure ou de friction, telles que des disques de frein, le domaine à considérer est, par exemple, celui faisant intervenir, à partir d'aiguilles **6** du type précité, une densité d'aiguilletage **da** comprise entre 20 et 100 coups/cm², une pénétration d'aiguilletage en z, p comprise entre 11 à 14 mm mesurée entre la face supérieure du plateau **4** et la pointe des aiguilles **6** et une masse spécifique **ms** pour chaque couche **2** comprise entre 800 à 1400 g/m².

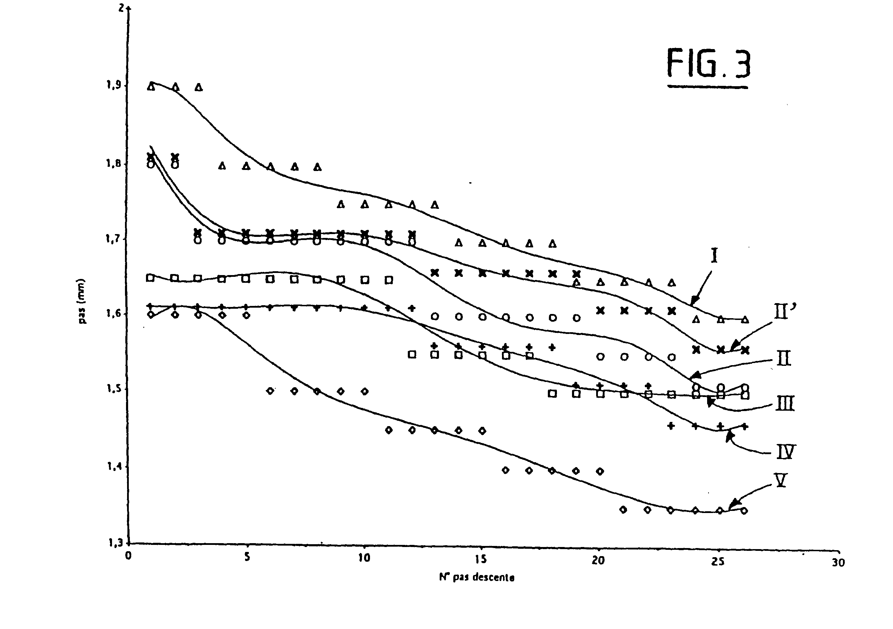

Dans le but d'obtenir une structure homogène faisant intervenir un taux de fibres global constant, un taux de fibres en **z** constant et une épaisseur par couches constante, la figure **3** fait apparaître différentes possibilités d'intervention permettant de définir globalement que le procédé selon l'invention consiste à choisir une loi de déplacement relatif qui dans l'exemple choisi est une loi de descente de la table d'aiguilletage comprenant, après l'aiguilletage de deux premières épaisseurs de couches **2** initiales, un pas de descente pouvant être compris entre 1,9 et 1.6 mm, à garder un tel pas de descente pour au moins deux couches successives superposées, à réduire ensuite le pas de descente pour l'aiguilletage d'au moins deux autres couches successives et à procéder de semblable façon par étapes, jusqu'à adopter un pas de descente final compris entre 1,6 et 1,35 mm pour au moins les deux dernières couches constitutives de l'épaisseur **E** devant être conférée au support **1.**

La figure **3** fournit, en courbe **I**, un processus opératoire spécifique en vue de l'obtention d'un substrat 1 ayant :
- un taux de fibres global **tf** de 40 % ± 2,
- un taux de fibres en **z tfz** de 3 % ± 2,
- une épaisseur de couche finale e/c de 1,85 mm ± 0,05.

On procède comme suit en retenant comme paramètre d'aiguilletage
- **da** = 30 coups/cm² ± 5,
- **p** = 12,5 mm ±0.5,
- **ms** = 1 050 g/m² ±50 mesurée en atmosphère à hygrométrie supérieure à 60 %.

Après la liaison en **z** de deux premières couches superposées sur le plateau **4,** on superpose trois couches qui sont successivement aiguilletées en adoptant un pas de descente 1,9 mm.

Pour la sixième couche et jusqu'à la dixième incluse, on adopte un pas de descente de 1,8 mm. On procède pour les couches onze à quinze incluses en adoptant un pas de descente égal à 1,75 mm, puis un pas de descente égal à 1,70 mm pour les couches seize à vingt et enfin un pas de descente de 1,65 mm pour les couches vint et un à vingt cinq.

Enfin, et dans la mesure où l'épaisseur **E** est formée par la superposition de vingt huit couches comme cela peut être considéré fréquent dans l'application visée, on adopte un pas de descente de 1,6 mm pour les trois dernières couches.

Dans la mesure où l'épaisseur **E** devrait faire intervenir la superposition de deux ou trois couches supplémentaires au-delà de vingt huit, ces couches supplémentaires feraient l'objet d'un même pas de descente que les trois dernières.

Finalement et comme cela est connu, on procède, avec ou sans changement du pas de descente, à une ou plusieurs passes d'aiguilletage de finition pour aiguilleter convenablement la ou les dernières couches.

La figure **3** fournit, en courbe II, un processus opératoire spécifique, en vue de l'obtention d'un substrat 1 ayant:
- un taux de fibres global **Tf** égal à 41 % ± 3,
- un taux de fibres en **z Tfz** sensiblement égal à 3% ± 2.
- une épaisseur de couche finale e/c sensiblement égale à 1,8 mm ± 0,05.

On procède comme suit en retenant comme paramètres d'aiguilletage :
- **da** = 30 coups/cm² ± 5,
- **p** = 12 mm ± 0,5,
- **ms** = 1 050 g/m2 ± 50 mesurée dans les mêmes conditions que ci-dessus.

Après la liaison en **z** des deux premières couches superposées sur le plateau **4,** on superpose deux couches **2** qui sont successivement aiguilletées en adoptant un pas de descente de 1,8 mm, puis dix couches aiguilletées avec un pas de descente de 1,7 mm, ensuite sept couches avec un pas de descente de 1,6 mm, enfin quatre couches avec un pas de descente de 1,55 mm et finalement trois couches avec un pas de descente de 1,50 mm si l'épaisseur **E** doit être formée par vingt huit couches.

La courbe III de la figure **3** fournit un processus opératoire avec des paramètres d'aiguillage:
- **da** = 45 coups/cm²± 5,
- **p** = 13,5 mm± 0.5,
- **ms** = 1 050 g/m² ± 50, selon les mêmes conditions,
en vue d'obtenir un substrat 1 ayant les caractéristiques suivantes :
- **Tf** = 48 % ± 4,
- **Tfz** = 5 % ± 2,
- **e/c** = 1,7 mm ± 0,05.

On procède sur les deux premières couches déposées :
- au dépôt et la liaison successive de douze couches **2** avec un pas de descente pour chacune d'elles égal à 1,65,
- au dépôt de six couches avec un pas de descente égal à 1,55,
- enfin au dépôt et la liaison successive de huit dernières couches avec un pas égal à 1,5, si l'épaisseur **E** est formée par vingt huit couches.

La courbe **IV** de la figure **3** illustre un mode opératoire du procédé de l'invention en vue de l'obtention d'un support **1** répondant aux caractéristiques suivantes :
- **Tf** = 50 % ± 4,
- **Tfz** = 8 % ± 2,
- **e/c** = 1,55 mm ± 0.05,
à partir de conditions opératoires, telles que :
- **da** = 85 coups/cm² ± 5,
- **p** = 13,5 mm ± 0,5,
- **ms** = 1 050 g/m² ± 50.

Selon l'invention, à partir des deux premières couches initiales successives, on :
- superpose douze couches **2** avec un pas de descente égal à 1,6,
- puis six couches supplémentaires avec un pas de descente égale à 1,55,
- quatre couches avec un pas de descente à 1,5 mm,
- puis enfin les quatre dernières avec un pas de descente à 1,45 mm, si l'épaisseur **E** est formée par vingt huit couches.

La courbe **V** illustre une cinquième variante consistant à procéder comme suit avec des conditions opératoires, telles que :
- **da** = 90 coups/cm² ± 5,
- **p** = 14 mm ± 0,5.
- **ms** = 1 050 g/m² ± 50,
en vue d'obtenir les caractéristiques :
- **Tf** = 52 % ± 4,
- **Tfz** = 10 % ± 2,
- **e/c** = 1.5 mm ± 0,05

On adopte après les deux premières couches 2 :
- cinq pas de descente à 1,6 mm,
- puis cinq pas à 1,5 mm,
- puis encore cinq pas à 1,45.
- de nouveau cinq pas successifs à 1,4,
- enfin six pas successifs à 1,35 mm, si l'épaisseur E est formée par vingt huit couches.

Dans les exemples ci-dessus, il convient d'admettre une tolérance de 0,05 mm du pas de descente adopté

Selon une autre disposition de l'invention qui n'est pas couverte par les revendications pour DE, GB, il est prévu de mettre en oeuvre le procédé ci dessus pour deux épaisseurs successives d'un même substrat 1, en adoptant des modes opératoires différents de façon à conférer au substrat 1 obtenu des caractéristiques différentes dans au moins deux zones successives de son épaisseur.

Il peut ainsi être procédé, comme il vient d'être dit pour la réalisation d'une épaisseur **E**, en choisissant le mode opératoire selon la courbe **II** pour la formation d'une épaisseur **E**_{**2**} selon la figure **4,** puis ensuite en adoptant le mode opératoire selon la courbe **III** ou **IV** pour une épaisseur successive **E**_{**3**}**,** puis enfin en retenant pour une épaisseur successive **E'**_{**2**} un mode opératoire selon la courbe Il' qui, en retenant les mêmes paramètres que la courbe Il adopte, après la pose de deux premières couches :
- deux pas de déplacement à 1,8 mm ± 0,05,
- dix pas de déplacement à 1,7 mm ± 0,05,
- sept pas de déplacement à 1,65 mm ± 0,05,
- quatre pas de déplacement à 1,60 mm ± 0,05,
- trois pas de déplacement à 1,55 mm ± 0,05.

Le substrat **1** ainsi obtenu se caractérise par une épaisseur globale faisant apparaître trois variations de caractéristiques physiques dont deux sont semblables et disposées de part et d'autre d'une partie centrale.

Les parties d'épaisseur **E**_{**2**} et **E'**_{**2**} possèdent des taux de fibres **Tf** et des taux de fibres en **z Tfz** inférieurs à ceux de la partie centrale, de sorte que le substrat **1** présente une structure favorable pour obtenir, par exemple après carbonisation et densification, une partie centrale de forte densité constituant une âme **20** résistante au sens mécanique du terme et bordée par deux épaisseurs latérales moins denses qui constituent en quelque sorte des joues d'usure **21** offrant de meilleures caractéristiques de frottement dans l'application à un système de freinage.

Les traits interrompus longs présentés par la figure **4** sont destinés à matérialiser les différentes parties, mais ne signifient pas que ces dernières connaissent entre elles une délimitation physique aussi stricte.

### POSSIBILITE D'APPLICATION INDUSTRIELLE :

Le procédé de fabrication selon l'invention est particulièrement adapté à la réalisation de substrats fibreux susceptibles de constituer, directement ou indirectement, des préformes aptes à subir ultérieurement une ou des opérations de carbonisation et de densification, en vue d'obtenir, après usinage, des pièces de frottement préférentiellement utilisées dans les systèmes de freinage du type à disques ou à disque et plaquettes.

## Revendications (Revendications pour l'(les) Etat(s) contractant(s) suivant(s): BE, CH, ES, IT, LI, NL, SE)

1. Procédé de réalisation d'un substrat fibreux par superposition de couches fibreuses, d'épaisseur sensiblement constante, du type consistant à
- superposer une épaisseur de couche sur une première posée sur un support.
- lier selon des conditions données les épaisseurs de couches superposées, par des aiguilles intervenant sensiblement perpendiculairement au plan de l'épaisseur de couche superposée,
- déplacer relativement d'un pas le support par rapport aux aiguilles,
- superposer une troisième épaisseur de couche sur les précédentes.
- lier la troisième épaisseur de couche sur les précédentes selon les mêmes conditions,
- procéder de même pour les épaisseurs de couches suivantes en faisant intervenir une efficacité constante des aiguilles,
**caractérisé en ce qu'**il consiste à adopter un pas de déplacement variable relativement entre le support et les aiguilles.

2. Procédé selon la revendication **1, caractérisé en ce qu'**il consiste, pour une épaisseur de substrat donnée, à adopter un pas de déplacement variable selon une loi de réduction de ce pas adoptée pour conférer une épaisseur constante aux différentes épaisseurs de couches superposées et liées constitutives de ladite épaisseur de substrat.

3. Procédé selon la revendication **1** ou **2, caractérisé en que**, à partir des paramètres d'aiguilletage suivants :
**da -** compris entre 30 et 90 coups/cm² ± 5.
**p -** compris entre 12.5 mm et 14 mm ± 0.5.
**ms -** voisine de 1 050 g/m²± 50.
en vue d'obtenir :
**Tf -** compris entre 40 % et 52 % ± 2 à 4,
**Tfz -** compris entre 3 % et 10 % ± 2.
**e/c -** comprise entre 1.85 mm et 1,5 mm ± 0.05
la loi de déplacement consiste à
- choisir un pas de déplacement compris entre 1.9 mm et 1,6 mm,
- garder le mème pas de déplacement pour au moins deux épaisseurs de couches successives,
- réduire le pas de déplacement pour lier au moins deux autres épaisseurs de couches successives,
- et procéder de semblable façon par étapes successives jusqu'à adopter un pas de déplacement compris entre 1.6 mm et 1.35 mm pour au moins les deux dernières épaisseurs de couches constitutives de l'épaisseur de substrat donnée.

4. Procédé selon l'une des revendications **1** à **3, caractérisé en qu'**il consiste à adopter une loi de déplacement à pas variable à partir de deux premières épaisseurs de couches superposées et pour les vingt six pas de déplacement suivants correspondant à une épaisseurtotale à base de 28 épaisseurs de couches.

5. Procédé selon l'une des revendications **1** à **4, caractérisé en ce que**, à partir des paramètres suivants :
| | |
|---|---|
| **da** | = 30 coups/cm² ± 5, |
| **p** | = 12,5 mm ± 0,5, |
| **ms** | = 1 050 g/m² ± 50, |
| **Tf** | = 40 % ± 2, |
| **Tfz** | = 3 % ± 2, |
| **e/c** | = 1,85 mm ± 0,05. |
le pas de déplacement suivant est adopté après la pose de deux premières épaisseurs de couches :
- trois pas de déplacement à 1,90 mm ± 0.05.
- cinq pas de déplacement à 1.80 mm ± 0.05.
- cinq pas de déplacement à 1 75 mm ± 0,05.
- cinq pas de déplacement à 1.70 mm ± 0.05.
- cinq pas de déplacement à 1.65 mm ± 0,05.
- trois pas de déplacement à 1,60 mm. ± 0.05.

6. Procédé selon l'une des revendications **1** à **4, caractérisé en ce que** à partir des paramètres suivants
| | |
|---|---|
| **da** | = 30 coups/cm² ± 5, |
| **p** | = 12 mm ± 0,5, |
| **ms** | = 1 050 g/m² ± 50, |
| **Tf** | = 41 % ± 3 |
| **Tfz** | = 3 % ± 2, |
| **e/c** | = 1,8 mm ± 0,05. |
le pas de déplacement suivant est adopté après la pose de deux premieres épaisseurs de couches
- deux pas de déplacement à 1,80 mm ± 0,05.
- dix pas de déplacement à 1,70 mm ± 0.05.
- sept pas de déplacement à 1 ,60 mm ± 0.05.
- quatre pas de déplacement à 1.55 mm ± 0,05.
- trois pas de déplacement à 1,50 mm ± 0,05.

7. Procédé selon l'une des revendications **1** à **4, caractérisé en ce que**, à partir des paramètres suivants :
| | |
|---|---|
| **da** | = 30 coups/cm² ± 5, |
| **p** | = 12 mm ± 0,5, |
| **ms** | = 1 050 g/m² ± 50, |
| **Tf** | = 41 % ± 3, |
| **Tfz** | = 3 % ± 2, |
| **e/c** | = 1,8 mm ± 0,05. |
le pas de déplacement suivant est adopté après la pose de deux premières épaisseurs de couches :
- deux pas de déplacement à 1,8 mm ± 0.05,
- dix pas de déplacement à 1.7 mm ± 0,05.
- sept pas de déplacement à 1,65 mm ± 0.05.
- quatre pas de déplacement à 1,60 mm ± 0,05.
- trois pas de déplacement à 1,55 mm ± 0,05.

8. Procédé selon l'une des revendications **1** à **4 caractérisé en ce que**. à partir des paramètres suivants :
| | |
|---|---|
| **da** | = 45 coups/cm² ± 5, |
| **p** | = 13,5 mm ± 0,5, |
| **ms** | = 1 050 g/m² ± 50, |
| **Tf** | = 48 % ± 4, |
| **Tfz** | = 5 % ± 2, |
| **e/c** | = 1,7 mm ± 0,05. |
le pas de déplacement suivant est adopté après la pose de deux premières épaisseurs de couches
- douze pas de déplacement à 1,65 mm ± 0 05.
- six pas de déplacement à 1,55 mm ± 0.05.
- huit pas de déplacement à 1,50 mm. ± 0,05.

9. Procédé selon l'une des revendications **1** à **4, caractérisé en ce que**, à partir des paramètres suivants :
| | |
|---|---|
| **da** | = 85 coups/cm² ± 5, |
| **p** | = 13,5 mm ± 0,5, |
| **ms** | = 1 050 g/m² ± 50, |
| **Tf** | = 50 % ± 4, |
| **Tfz** | = 8 % ± 2, |
| **e/c** | = 1,55 mm ± 0.05. |
le pas de déplacement suivant est adopté après la pose de deux premières épaisseurs de couches :
- douze pas de déplacement à 1,60 mm ± 0.05.
- six pas de déplacement à 1,55 mm ± 0,05,
- quatre pas de déplacement à 1,50 mm ± 0,05,
- quatre pas de déplacement à 1,45 mm ± 0,05.

10. Procédé selon l'une des revendications **1** à **4**, **caractérisé en ce que**, à partir des paramètres suivants :
| | |
|---|---|
| **da** | = 90 coups/cm² ± 5, |
| **p** | = 14 mm ± 0,5, |
| **ms** | = 1 050 g/m² ± 50, |
| **Tf** | = 52% ± 4, |
| **Tfz** | = 10 % ± 2, |
| **e/c** | = 1,5 mm ± 0,05. |
le pas de déplacement suivant est adopté après la pose de deux premières épaisseurs de couches :
- cinq pas de déplacement à 1,60 mm ± 0,05,
- cinq pas de déplacement à 1,50 mm ± 0,05,
- cinq pas de déplacement à 1,45 mm ± 0,05,
- cinq pas de déplacement à 1,40 mm ± 0,05,
- six pas de déplacement à 1,35 mm ± 0.05.

11. Procédé selon l'une des revendications **1** à **9**, **caractérisé en ce que** l'on adopte une loi de déplacement pour une épaisseur de substrat donnée puis une loi de déplacement différente pour une épaisseur donnée suivante du même substrat.

12. Substrat fibreux constitué à base d'une pluralité de couches fibreuses, puis progressivement superposées et liées successivement, obtenu par la mise en oeuvre du procédé selon l'une des revendications **1** à **10** et **caractérisé en ce qu'**il compte au moins une épaisseur donnée **E** dans laquelle les épaisseurs de couches successives 2 superposées et liées présentent une épaisseur constante.

13. Substrat selon la revendication **12**, **caractérisé en qu'**il présente au moins une seconde épaisseur donnée **E**_{**3**} suivant la première **E**_{**2**} et liée à elle et dans laquelle l'épaisseur de couches **2** est constante mais différente de celle de la première épaisseur donnée.

## Revendications (Revendications pour l'(les) Etat(s) contractant(s) suivant(s): DE, GB)

1. Procédé de réalisation d'un substrat fibreux par superposition de couches fibreuses, d'épaisseur sensiblement constante, du type consistant à
- superposer une épaisseur de couche sur une première posée sur un support,
- lier selon des conditions données les épaisseurs de couches superposées, par des aiguilles intervenant sensiblement perpendiculairement au plan de l'épaisseur de couche superposée,
- déplacer relativement d'un pas le support par rapport aux aiguilles,
- superposer une troisième épaisseur de couche sur les précédentes,
- lier la troisième épaisseur de couche sur les précédentes selon les mêmes conditions,
- procéder de même pour les épaisseurs de couches suivantes en adoptant un pas de déplacement variable entre le support et les aiguilles
selon une loi de réduction de ce pas pour conférer une épaisseur constante aux différentes épaisseurs de couches superposées et liées constitutives du substrat, et faisant intervenir de ce fait une efficacité constante des aiguilles.

2. Procédé selon la revendication **1**, **caractérisé en que**, à partir des paramètres d'aiguilletage suivants :
**da -** compris entre 30 et 90 coups/cm² ± 5,
**p -** compris entre 12,5 mm et 14 mm ± 0,5,
**ms -** voisine de 1 050 g/m²± 50.
en vue d'obtenir :
**Tf -** compris entre 40 % et 52 % ± 2 à 4,
**Tfz -** compris entre 3 % et 10 % ± 2,
**e/c -** comprise entre 1,85 mm et 1,5 mm ± 0,05,
la loi de déplacement consiste à :
- choisir un pas de déplacement compris entre 1,9 mm et 1,6 mm,
- garder le même pas de déplacement pour au moins deux épaisseurs de couches successives,
- réduire le pas de déplacement pour lier au moins deux autres épaisseurs de couches successives,
- et procéderde semblable façon par étapes successives jusqu'à adopter un pas de déplacement compris entre 1,6 mm et 1,35 mm pour au moins les deux dernières épaisseurs de couches constitutives de l'épaisseur de substrat donnée.

3. Procédé selon l'une des revendications **1** et **2, caractérisé en qu**'il consiste à adopter une loi de déplacement à pas variable à partir de deux premières épaisseurs de couches superposées et pour les vingt six pas de déplacement suivants correspondant à une épaisseur totale à base de 28 épaisseurs à de couches.

4. Procédé selon l'une des revendications **1** à **3, caractérisé en ce que**, à partir des paramètres suivants :
| | |
|---|---|
| **da** | = 30 coups/cm² ± 5, |
| **p** | = 12,5 mm ± 0,5, |
| **ms** | = 1 050 g/m² ± 50, |
| **Tf** | = 40 % ± 2, |
| **Tfz** | = 3 % ± 2, |
| **e/c** | = 1,85 mm ± 0,05. |
le pas de déplacement suivant est adopté après la pose de deux premières épaisseurs de couches :
- trois pas de déplacement à 1,90 mm ± 0,05,
- cinq pas de déplacement à 1,80 mm ± 0,05,
- cinq pas de déplacement à 1,75 mm ± 0,05,
- cinq pas de déplacement à 1,70 mm ± 0,05,
- cinq pas de déplacement à 1,65 mm ± 0,05,
- trois pas de déplacement à 1,60 mm. ± 0,05.

5. Procédé selon l'une des revendications 1 à 3, **caractérisé en ce que**, à partir des paramètres suivants
| | |
|---|---|
| **da** | = 30 coups/cm² ± 5, |
| **p** | = 12 mm ± 0,5, |
| **ms** | = 1 050 g/m² ± 50, |
| **Tf** | = 41 % ± 3, |
| **Tfz** | = 3 % ± 2, |
| **e/c** | = 1,8 mm ± 0,05. |
le pas de déplacement suivant est adopté après la pose de deux premières épaisseurs de couches
- deux pas de déplacement à 1,80 mm ± 0,05,
- dix pas de déplacement à 1,70 mm ± 0,05,
- sept pas de déplacement à 1,60 mm ± 0,05,
- quatre pas de déplacement à 1,55 mm ± 0,05,
- trois pas de déplacement à 1,50 mm ± 0,05.

6. Procédé selon l'une des revendications **1** à **3, caractérisé en ce que**, à partir des paramètres suivants :
| | |
|---|---|
| **da** | = 30 coups/cm² ± 5, |
| **p** | = 12 mm ± 0,5, |
| **ms** | = 1 050 g/m² ± 50, |
| **Tf** | = 41 % ± 3, |
| **Tfz** | = 3 % ± 2, |
| **e/c** | = 1,8 mm ± 0,05. |
le pas de déplacement suivant est adopté après la pose de deux premières épaisseurs de couches :
- deux pas de déplacement à 1,8 mm ± 0,05,
- dix pas de déplacement à 1,7 mm ± 0,05,
- sept pas de déplacement à 1,65 mm ± 0,05,
- quatre pas de déplacement à 1,60 mm ± 0,05,
- trois pas de déplacement à 1,55 mm ± 0,05.

7. Procédé selon l'une des revendications **1** à **3, caractérisé en ce que**, à partir des paramètres suivants :
| | |
|---|---|
| **da** | = 45 coups/cm² ± 5, |
| **p** | = 13,5 mm ± 0,5, |
| **ms** | = 1 050 g/m² ± 50, |
| **Tf** | = 48 % ± 4, |
| **Tfz** | = 5% ± 2, |
| **e/c** | = 1,7 mm ± 0,05. |
le pas de déplacement suivant est adopté après la pose de deux premières épaisseurs de couches :
- douze pas de déplacement à 1,65 mm ± 0,05,
- six pas de déplacement à 1,55 mm ± 0,05,
- huit pas de déplacement à 1,50 mm. ± 0.05.

8. Procédé selon l'une des revendications 1 à 3, **caractérisé en ce que**, à partir des paramètres suivants :
| | |
|---|---|
| **da** | = 85 coups/cm² ± 5, |
| **p** | = 13,5 mm ± 0,5, |
| **ms** | = 1 050 g/m² ± 50, |
| **Tf** | = 50 % ± 4, |
| **Tfz** | = 8% ± 2, |
| **e/c** | = 1,55 mm ± 0,05. |
le pas de déplacement suivant est adopté après la pose de deux premières épaisseurs de couches :
- douze pas de déplacement à 1,60 mm ± 0,05,
- six pas de déplacement à 1,55 mm ± 0,05,
- quatre pas de déplacement à 1,50 mm ± 0,05,
- quatre pas de déplacement à 1,45 mm ± 0,05.

9. Procédé selon l'une des revendications 1 à 3, **caractérisé en ce que**, à partir des paramètres suivants :
| | |
|---|---|
| **da** | = 90 coups/cm² ± 5, |
| **p** | = 14 mm ± 0,5, |
| **ms** | = 1 050 g/m² ± 50, |
| **Tf** | = 52 % ± 2, |
| **Tfz** | = 10 % ± 2, |
| **e/c** | = 1,5 mm ± 0,05. |
le pas de déplacement suivant est adopté après la pose de deux premières épaisseurs de couches :
- cinq pas de déplacement à 1,60 mm ± 0,05,
- cinq pas de déplacement à 1,50 mm ± 0,05,
- cinq pas de déplacement à 1,45 mm ± 0.05,
- cinq pas de déplacement à 1,40 mm ± 0,05,
- six pas de déplacement à 1,35 mm ± 0,05.

## Claims (Claims for the following Contracting State(s): BE, CH, ES, IT, LI, NL, SE)

1. Method of making a fibrous substrate by superposing fibrous layers of substantially constant thickness, the method being of the type consisting in:
- superposing a layer thickness on a first layer placed on a support;
- bonding together the superposed layer thicknesses under given conditions using needles that operate substantially perpendicularly to the plane of the superposed layer thickness;
- displacing the support relative to the needles through one step;
- superposing a third layer thickness on the preceding layer thicknesses;
- bonding the third layer thickness to the preceding layer thicknesses under the same conditions;
- proceeding in the same manner for the following layer thicknesses, making use of constant efficiency for the needles,
**characterized in that** it consists in adopting a varying step size between the support and the needles.

2. A method according to claim 1, **characterized in that**, for a given thickness of substrate, it consists in adopting a displacement step size that varies in application of a step size reduction relationship adopted to impart constant thickness to the various superposed and bonded-together layer thicknesses making up said substrate thickness.

3. A method according to claim 1 or 2, **characterized in that**, using the following needling parameters:
da - lying in the range 30 to 90 strokes / cm² ± 5;
p - lying in the range 12.5 mm to 14 mm ± 0.5;
ms - about 1,050 g/m² ± 50;
in order to obtain:
Tf - lying in the range 40% to 52% ± 2 to 4;
Tfz - lying in the range 3% to 10% ± 2;
e/c - lying in the range 1.85 mm to 1.5 mm ± 0.05;
the displacement relationship consists in:
- selecting a displacement step size lying in the range 1.9 mm to 1.6mm;
- retaining the same displacement step for at least two successive layer thicknesses;
- reducing the displacement step to bond together at least two other successive layer thicknesses; and
- proceeding in similar manner in successive stages until a displacement step size is adopted lying in the range 1.6 mm to 135 mm for at least the last two layer thicknesses making up the given substrate thickness.

4. Method according to one of claims 1 to 3, **characterized in that** it consists in adopting a varying step size displacement relationship starting from the first two superposed layer thicknesses and covering twenty-six following displacement steps corresponding to a total thickness based on 28 layer thicknesses.

5. Method according to one of claims 1 to 4, **characterized in that**, with the following parameters:
| | | |
|---|---|---|
| da | = 30 strokes/cm² | ± 5; |
| p | = 12.5mm | ±0.5; |
| ms | = 1,050g/m² | ±50; |
| Tf | = 40% | ±2; |
| Tfz | = 3% | ±2; |
| e/c | = 1.85mm | ±0.05; |
the following displacement step sizes are adopted
thicknesses have been laid:
- three displacement steps of 1.90 mm ± 0.05;
- five displacement steps of 1.80 mm ± 0.05;
- five displacement steps of 1.75 mm ± 0.05;
- five displacement steps of 1.70 mm ± 0.05;
- five displacement steps of 1.65 mm ± 0.05;
- three displacement steps of 1.60 mm ± 0.05.

6. Method according to one of claims 1 to 4, **characterized in that**, with the following parameters:
| | | |
|---|---|---|
| da | = 30 strokes/cm² | ± 5; |
| p | = 12mm | ±0.5; |
| ms | = 1,050g/m² | ±50; |
| Tf | = 41% | ±3; |
| Tfz. | = 3% | ±2; |
| e/c | = 1.8mm | ±0.05; |
the following displacement step sizes are adopted after the first two layer thicknesses have been laid:
- two displacement steps of 1.80 mm ± 0.05;
- ten displacement steps of 1.70 mm ± 0.05;
- seven displacement steps of 1.60 mm ± 0.05;
- four displacement steps of 1.55 mm ± 0.05;
- three displacement steps of 1.50 mm ± 0.05.

7. Method according to one of claims 1 to 4, **characterized in that**, with the following parameters:
| | | |
|---|---|---|
| da | = 30 strokes/cm² | ± 5; |
| p | = 12mm | ±0.5; |
| ms | = 1,050g/m² | ±50; |
| Tf | = 41% | ±3; |
| Tfz | = 3% | ±2; |
| e/c | = 1.8mm | ± 0.05; |
the following displacement step sizes are adopted after the first two layer thicknesses have been laid:
- two displacement steps of 1.8 mm ± 0.05;
- ten displacement steps of 1.7 mm ± 0.05;
- seven displacement steps of 1.65 mm ± 0.05;
- four displacement steps of 1.60 mm ± 0.05;
- three displacement steps of 1.55 mm ± 0.05.

8. Method according to one of claims 1 to 4, **characterized in that**, with the following parameters:
| | | |
|---|---|---|
| da | = 45 strokes/cm² | ± 5; |
| p | = 13.5mm | ±0.5; |
| ms | = 1,050 g/m² | ± 50; |
| Tf | = 48% | ±4; |
| Tfz | = 5% | ±2; |
| e/c | = 1.7mm | ±0.05; |
the following displacement step sizes are adopted after the first two layer thicknesses have been laid:
- twelve displacement steps of 1.65 mm ± 0.05;
- six displacement steps of 1.55 mm ± 0.05;
- eight displacement steps of 1.50 mm ± 0.05.

9. Method according to one of claims 1 to 4, **characterized in that**, with the following parameters:
| | | |
|---|---|---|
| da | = 85 strokes/cm² | ± 5; |
| p | = 13.5mm | ±0.5; |
| ms | = 1,050g/m² | ±50; |
| Tf | = 50% | ±4; |
| Tfz | = 8% | ±2; |
| e/c | = 1.55 mm | ±0.05; |
the following displacement step sizes are adopted after the first two layer thicknesses have been laid:
- twelve displacement steps of 1.60 mm ± 0.05;
- six displacement steps of 1.55 mm ± 0.05;
- four displacement steps of 1.50 mm ± 0.05;
- four displacement steps of 1.45 mm ± 0.05.

10. Method according to one of claims 1 to 4, **characterized in that**, with the following parameters:
| | | |
|---|---|---|
| da | = 90 strokes/cm² | ± 5; |
| p | = 14mm | ±0.5; |
| ms | = 1,050g/m² | ±50; |
| Tf | = 52% | ±4; |
| Tfz | = 10% | ±2; |
| e/c | = 1.5mm | ±0.05; |
the following displacement step sizes are adopted after the first two layer thicknesses have been laid:
- five displacement steps of 1.60 mm ± 0.05;
- five displacement steps of 1.50 mm ± 0.05;
- five displacement steps of 1.45 mm ± 0.05;
- five displacement steps of 1.40 mm ± 0.05;
- six displacement steps of 1.35 mm ± 0.05.

11. A method according to any one of claims 1 to 9, **characterized in that** a displacement relationship is adopted for a given substrate thickness and then a different displacement relationship for a following given thickness of the same substrate.

12. A fibrous substrate built up on the basis of a plurality of fibrous layers, that are progressively superposed and successively bonded together, obtained by implementing the method according to any one of claims 1 to 10, **characterized in that** it includes at least one given thickness E in which the successive superposed and bonded-together layer thicknesses 2 are of constant thickness.

13. A substrate according to claim 12, **characterized in that** it has at least one second given thickness E₃ following the first given thickness E₂ and bonded thereto, and in which the layer thickness 2 is constant but different from that of the first given thickness.

## Claims (Claims for the following Contracting State(s): DE, GB)

1. Method of making a fibrous substrate by superposing fibrous layers of substantially constant thickness, the method being of the type consisting in:
- superposing a layer thickness on a first layer placed on a support;
- bonding together the superposed layer thicknesses under given conditions using needles that operate substantially perpendicularly to the plane of the superposed layer thickness;
- displacing the support relative to the needles through one step;
- superposing a third layer thickness on the preceding layer thicknesses;
- bonding the third layer thickness to the preceding layer thicknesses under the same conditions;
- proceeding in the same manner for the following layer thicknesses, adopting a varying step size between the support and the needles according to a step size reduction relationship so as to impart a constant thickness to the various superposed and bonded-together layer thicknesses making up the substrate and providing by this a constant efficiency of the needles.

2. Method according to claim 1, **characterized in that**, using the following needling parameters:
da - lying in the range 30 to 90 strokes / cm² ± 5;
p - lying in the range 12.5 mm to 14 mm ± 0.5;
ms - about 1,050 g/m² ± 50;
in order to obtain:
Tf - lying in the range 40% to 52% ± 2 to 4;
Tfz - lying in the range 3% to 10% ± 2;
e/c - lying in the range 1.85 mm to 1.5 mm ± 0.05;
the displacement relationship consists in:
- selecting a displacement step size lying in the range 1.9 mm to 1.6mm;
- retaining the same displacement step for at least two successive layer thicknesses;
- reducing the displacement step to bond together at least two other successive layer thicknesses; and
- proceeding in similar manner in successive stages until a displacement step size is adopted lying in the range 1.6 mm to 135 mm for at least the last two layer thicknesses making up the given substrate thickness.

3. Method according to one of claims 1 and 2, **characterized in that** it consists in adopting a varying step size displacement relationship starting from the first two superposed layer thicknesses and covering twenty-six following displacement steps corresponding to a total thickness based on 28 layer thicknesses.

4. Method according to one of claims 1 to 3, **characterized in that**, with the following parameters:
| | | |
|---|---|---|
| da | = 30 strokes/cm² | ± 5; |
| p | = 12.5mm | ±0.5; |
| ms | = 1,050g/m² | ±50; |
| Tf | = 40% | ±2; |
| Tfz | = 3% | ±2; |
| e/c | = 1.85mm | ±0.05; |
the following displacement step sizes are adopted
thicknesses have been laid:
- three displacement steps of 1.90 mm ± 0.05;
- five displacement steps of 1.80 mm ± 0.05;
- five displacement steps of 1.75 mm ± 0.05;
- five displacement steps of 1.70 mm ± 0.05;
- five displacement steps of 1.65 mm ± 0.05;
- three displacement steps of 1.60 mm ± 0.05.

5. Method according to one of claims 1 to 3, **characterized in that**, with the following parameters:
| | | |
|---|---|---|
| da | = 30 strokes/cm² | ± 5; |
| p | = 12mm | ±0.5; |
| ms | = 1,050g/m² | ±50; |
| Tf | = 41 % | ±3; |
| Tfz. | = 3% | ±2; |
| e/c | = 1.8mm | ±0.05; |
the following displacement step sizes are adopted after the first two layer thicknesses have been laid:
- two displacement steps of 1.80 mm ± 0.05;
- ten displacement steps of 1.70 mm ± 0.05;
- seven displacement steps of 1.60 mm ± 0.05;
- four displacement steps of 1.55 mm ± 0.05;
- three displacement steps of 1.50 mm ± 0.05.

6. Method according to one of claims 1 to 3, **characterized in that**, with the following parameters:
| | | |
|---|---|---|
| da | = 30 strokes/cm² | ± 5; |
| p | = 12mm | ±0.5; |
| ms | = 1,050g/m² | ±50; |
| Tf | = 41% | ±3; |
| Tfz | = 3% | ±2; |
| e/c | = 1.8mm | ± 0.05; |
the following displacement step sizes are adopted after the first two layer thicknesses have been laid:
- two displacement steps of 1.8 mm ± 0.05;
- ten displacement steps of 1.7 mm ± 0.05;
- seven displacement steps of 1.65 mm ± 0.05;
- four displacement steps of 1.60 mm ± 0.05;
- three displacement steps of 1.55 mm ± 0.05.

7. Method according to one of claims 1 to 3, **characterized in that**, with the following parameters:
| | | |
|---|---|---|
| da | = 45 strokes/cm² | ± 5; |
| p | = 13.5mm | ±0.5; |
| ms | = 1,050 g/m² | ± 50; |
| Tf | = 48% | ±4; |
| Tfz | = 5% | ±2; |
| e/c | = 1.7mm | ±0.05; |
the following displacement step sizes are adopted after the first two layer thicknesses have been laid:
- twelve displacement steps of 1.65 mm ± 0.05;
- six displacement steps of 1.55 mm ± 0.05;
- eight displacement steps of 1.50 mm ± 0.05.

8. Method according to one of claims 1 to 3, **characterized in that**, with the following parameters:
| | | |
|---|---|---|
| da | = 85 strokes/cm² | ± 5; |
| p | = 13.5mm | ±0.5; |
| ms | = 1,050g/m² | ±50; |
| Tf | = 50% | ±4; |
| Tfz | = 8% | ±2; |
| e/c | = 1.55 mm | ±0.05; |
the following displacement step sizes are adopted after the first two layer thicknesses have been laid:
- twelve displacement steps of 1.60 mm ± 0.05;
- six displacement steps of 1.55 mm ± 0.05;
- four displacement steps of 1.50 mm ± 0.05;
- four displacement steps of 1.45 mm ± 0.05.

9. Method according to one of claims 1 to 3, **characterized in that**, with the following parameters:
| | | |
|---|---|---|
| da | = 90 strokes/cm² | ± 5; |
| p | = 14mm | ±0.5; |
| ms | = 1,050g/m² | ±50; |
| Tf | = 52% | ±4; |
| Tfz | = 10% | ±2; |
| e/c | = 1.5mm | ±0.05; |
the following displacement step sizes are adopted after the first two layer thicknesses have been laid:
- five displacement steps of 1.60 mm ± 0.05;
- five displacement steps of 1.50 mm ± 0.05;
- five displacement steps of 1.45 mm ± 0.05;
- five displacement steps of 1.40 mm ± 0.05;
- six displacement steps of 1.35 mm ± 0.05.

## Patentansprüche (Patentansprüche für folgende(n) Vertragsstaat(en): BE, CH, ES, IT, LI, NL, SE)

1. Verfahren zur Herstellung von Fasersubstraten durch Übereinanderlegen von Faserschichten von im wesentlichen konstanter Dicke, wobei
- eine Schicht definierter Dicke über einer auf einem Träger vorgesehenen ersten Schicht definierter Dicke angeordnet wird,
- die übereinanderliegenden Schichten definierter Dicke unter gegebenen Bedingungen mit Nadeln, die im wesentlichen senkrecht zur Ebene der übereinanderliegenden Schichten eingreifen, verbunden werden,
- der Träger bezüglich der Nadeln um einen Schrittbetrag relativ verschoben wird,
- eine dritte Schicht definierter Dicke auf den vorhergehenden Schichten angeordnet wird,
- die dritte Schicht mit den vorhergehenden Schichten unter den gleichen Bedingungen verbunden wird und
- mit den folgenden Schichten ebenso verfahren wird, wobei bei konstanter Nadelwirksamkeit gearbeitet wird,
**dadurch gekennzeichnet, daß** es darin besteht, daß ein variabler Schrittbetrag der relativen Verschiebung zwischen Träger und Nadeln eingeführt wird.

2. Verfahren nach Anspruch 1, **dadurch gekennzeichnet, daß** es darin besteht, für eine gegebene Substratdicke einen variablen Schrittbetrag der Verschiebung gemäß einem Gesetz der Verminderung des Schrittbetrags einzuführen, um den verschiedenen übereinanderliegenden und miteinander verbundenen Schichten, welche die Dicke des Substrats ausmachen, eine konstante Dicke zu verleihen.

3. Verfahren nach Anspruch 1 oder 2, **dadurch gekennzeichnet, daß** ausgehend von den folgenden Vernadelungsparametern:
SD - im Bereich von 30 bis 90 Stichen/cm² ± 5,
EN - im Bereich von 12,5 mm bis 14 mm ± 0,5
und
sM - nahe 1050 g/m² ± 50
das Verschiebungsgesetz darin besteht:
- einen Schrittbetrag der Verschiebung im Bereich von 1,9 mm bis 1,6 mm auszuwählen,
- den gleichen Schrittbetrag für mindestens zwei aufeinanderfolgende Schichten konstanter Dicke beizubehalten,
- den Schrittbetrag für die Verbindung von mindestens zwei weiteren aufeinanderfolgenden Schichten zu verkleinern und
- durch aufeinanderfolgende Schritte auf ähnliche Weise vorzugehen, bis mindestens für die letzten beiden Schichten, welche die gegebene Dicke des Substrats ausmachen, ein Schrittbetrag im Bereich von 1,6 mm bis 1,35 mm erreicht ist,
um zu erhalten:
FA - im Bereich von 40 % bis 52 % ± 2 bis 4,
FAz - im Bereich von 3 % bis 10 % ± 2
und
d/s - im Bereich von 1,85 mm bis 1,5 mm ± 0,05.

4. Verfahren nach einem der Ansprüche 1 bis 3, **dadurch gekennzeichnet, daß** es darin besteht, ausgehend von zwei ersten übereinanderliegenden Schichten gegebener Dicke und für die folgenden 26 Schrittbeträge der Verschiebung ein Verschiebungsgesetz mit variablem Schrittbetrag, entsprechend einer Gesamtdicke auf der Basis von 28 Schichten definierter Dicke, einzusetzen.

5. Verfahren nach einem der Ansprüche 1 bis 4, **dadurch gekennzeichnet, daß** ausgehend von den folgenden Parametern:
| | |
|---|---|
| SD = | 30 Stiche/cm² ± 5, |
| EN = | 12,5 mm ± 0,5, |
| sM = | 1050 g/m² ± 50, |
| FA = | 40 % ± 2, |
| FAz = | 3 % ± 2 und |
| d/s = | 1,85 mm ± 0,05 |
nach dem Anbringen von zwei ersten Schichten definierter Dicke die folgenden Schrittbeträge der Verschiebung angewandt werden:
- drei Schrittbeträge der Verschiebung von 1,90 mm ± 0,05,
- fünf Schrittbeträge der Verschiebung von 1,80 mm ± 0,05,
- fünf Schrittbeträge der Verschiebung von 1,75 mm ± 0,05,
- fünf Schrittbeträge der Verschiebung von 1,70 mm ± 0,05,
- fünf Schrittbeträge der Verschiebung von 1,65 mm ± 0,05
und
- drei Schrittbeträge der Verschiebung von 1,60 mm ± 0,05.

6. Verfahren nach einem der Ansprüche 1 bis 4, **dadurch gekennzeichnet, daß** ausgehend von den folgenden Parametern:
| | |
|---|---|
| SD = | 30 Stiche/cm² ± 5, |
| EN = | 12 mm ± 0,5, |
| sM = | 1050 g/m² ± 50, |
| FA = | 41 % ± 3, |
| FAz = | 3 % ± 2 und |
| d/s = | 1,8 mm ± 0,05 |
nach dem Anbringen von zwei ersten Schichten definierter Dicke die folgenden Schrittbeträge der Verschiebung angewandt werden:
- zwei Schrittbeträge der Verschiebung von 1,80 mm ± 0,05,
- zehn Schrittbeträge der Verschiebung von 1,70 mm ± 0,05,
- sieben Schrittbeträge der Verschiebung von 1,60 mm ± 0,05,
- vier Schrittbeträge der Verschiebung von 1,55 mm ± 0,05
und
- drei Schrittbeträge der Verschiebung von 1,50 mm ± 0,05.

7. Verfahren nach einem der Ansprüche 1 bis 4, **dadurch gekennzeichnet, daß** ausgehend von den folgenden Parametern:
| | |
|---|---|
| SD = | 30 Stiche/cm² ± 5, |
| EN = | 12 mm ± 0,5, |
| sM = | 1050 g/m² ± 50, |
| FA = | 41 % ± 3, |
| FAz = | 3 % ± 2 und |
| d/s = | 1,8 mm ± 0,05 |
nach dem Anbringen von zwei ersten Schichten definierter Dicke die folgenden Schrittbeträge der Verschiebung angewandt werden:
- zwei Schrittbeträge der Verschiebung von 1,8 mm ± 0,05,
- zehn Schrittbeträge der Verschiebung von 1,7 mm ± 0,05,
- sieben Schrittbeträge der Verschiebung von 1,65 mm ± 0,05,
- vier Schrittbeträge der Verschiebung von 1,60 mm ± 0,05
und
- drei Schrittbeträge der Verschiebung von 1,55 mm ± 0,05.

8. Verfahren nach einem der Ansprüche 1 bis 4, **dadurch gekennzeichnet, daß** ausgehend von den folgenden Parametern:
| | |
|---|---|
| SD = | 45 Stiche/cm² ± 5, |
| EN = | 13,5 mm ± 0,5, |
| sM = | 1050 g/m² ± 50, |
| FA = | 48 % ± 4, |
| FAz = | 5 % ± 2 und |
| d/s = | 1,7 mm ± 0,05 |
nach dem Anbringen von zwei ersten Schichten definierter Dicke die folgenden Schrittbeträge der Verschiebung angewandt werden:
- zwölf Schrittbeträge der Verschiebung von 1,65 mm ± 0,05,
- sechs Schrittbeträge der Verschiebung von 1,55 mm ± 0,05
und
- acht Schrittbeträge der Verschiebung von 1,50 mm ± 0,05.

9. Verfahren nach einem der Ansprüche 1 bis 4, **dadurch gekennzeichnet, daß** ausgehend von den folgenden Parametern:
| | |
|---|---|
| SD = | 85 Stiche/cm² ± 5, |
| EN = | 13,5 mm ± 0,5, |
| sM = | 1050 g/m² ± 50, |
| FA = | 50 % ± 4, |
| FAz = | 8 % ± 2 und |
| d/s = | 1,55 mm ± 0,05 |
nach dem Anbringen von zwei ersten Schichten definierter Dicke die folgenden Schrittbeträge der Verschiebung angewandt werden:
- zwölf Schrittbeträge der Verschiebung von 1,60 mm ± 0,05,
- sechs Schrittbeträge der Verschiebung von 1,55 mm ± 0,05,
- vier Schrittbeträge der Verschiebung von 1,50 mm ± 0,05
und
- vier Schrittbeträge der Verschiebung von 1,45 mm ± 0,05.

10. Verfahren nach einem der Ansprüche 1 bis 4, **dadurch gekennzeichnet, daß** ausgehend von den folgenden Parametern:
| | |
|---|---|
| SD = | 90 Stiche/cm² ± 5, |
| EN = | 14 mm ± 0,5, |
| sM = | 1050 g/m² ± 50, |
| FA = | 52 % ± 4, |
| FAz = | 10 % ± 2 und |
| d/s = | 1,5 mm ± 0,05 |
nach dem Anbringen von zwei ersten Schichten definierter Dicke die folgenden Schrittbeträge der Verschiebung angewandt werden:
- fünf Schrittbeträge der Verschiebung von 1,60 mm ± 0,05,
- fünf Schrittbeträge der Verschiebung von 1,50 mm ± 0,05,
- fünf Schrittbeträge der Verschiebung von 1,45 mm ± 0,05,
- fünf Schrittbeträge der Verschiebung von 1,40 mm ± 0,05
und
- sechs Schrittbeträge der Verschiebung von 1,35 mm ± 0,05.

11. Verfahren nach einem der Ansprüche 1 bis 9, **dadurch gekennzeichnet, daß** ein Verschiebungsgesetz für eine gegebene Lage und anschließend ein unterschiedliches Verschiebungsgesetz für die folgende Lage des gleichen Substrats angewandt wird.

12. Fasersubstrat, das aus mehreren Faserschichten, die schrittweise übereinandergelegt werden und nacheinander verbunden werden, besteht und durch die Anwendung des Verfahrens nach' einem der Ansprüche 1 bis 10 hergestellt wird, **dadurch gekennzeichnet, daß** es mindestens eine Lage gegebener Dicke E aufweist, worin die aufeinanderfolgenden Schichten 2, die übereinandergelegt und miteinander verbunden sind, eine konstante Dicke aufweisen.

13. Substrat nach Anspruch 12, **dadurch gekennzeichnet, daß** es mindestens eine zweite Lage gegebener Dicke E₃ aufweist, die auf die erste Lage gegebener Dicke E₂ folgt, mit ihr verbunden ist und in der die Dicke der Schichten 2 konstant, jedoch von der Dicke der Schichten 2 der ersten Lage gegebener Dicke verschieden ist.

## Patentansprüche (Patentansprüche für folgende(n) Vertragsstaat(en): DE, GB)

1. Verfahren zur Herstellung von Fasersubstraten durch Übereinanderlegen von Faserschichten von im wesentlichen konstanter Dicke, wobei
- eine Schicht definierter Dicke über einer auf einem Träger vorgesehenen ersten Schicht definierter Dicke angeordnet wird,
- die übereinanderliegenden Schichten definierter Dicke unter gegebenen Bedingungen mit Nadeln, die im wesentlichen senkrecht zur Ebene der übereinanderliegenden Schichten eingreifen, verbunden werden,
- der Träger bezüglich der Nadeln um einen Schrittbetrag relativ verschoben wird,
- eine dritte Schicht definierter Dicke auf den vorhergehenden Schichten angeordnet wird,
- die dritte Schicht mit den vorhergehenden Schichten unter den gleichen Bedingungen verbunden wird und
- mit den folgenden Schichten ebenso verfahren wird, wobei gemäß einem Gesetz der Verminderung des Schrittbetrags, um den verschiedenen übereinanderliegenden und miteinander verbundenen Schichten definierter Dicke, welche das Substrat ausmachen, eine konstante Dicke zu verleihen, wobei hierdurch bei konstanter Nadelwirksamkeit gearbeitet wird, ein variabler Schrittbetrag der relativen Verschiebung zwischen Träger und Nadeln eingeführt wird.

2. Verfahren nach Anspruch 1, **dadurch gekennzeichnet, daß** ausgehend von den folgenden Vernadelungsparametern:
SD - im Bereich von 30 bis 90 Stichen/cm² ± 5,
EN - im Bereich von 12,5 mm bis 14 mm ± 0,5
und
sM - nahe 1050 g/m² ± 50
das Verschiebungsgesetz darin besteht:
- einen Schrittbetrag der Verschiebung im Bereich von 1,9 mm bis 1,6 mm auszuwählen,
- den gleichen Schrittbetrag für mindestens zwei aufeinanderfolgende Schichten konstanter Dicke beizubehalten,
- den Schrittbetrag für die Verbindung von mindestens zwei weiteren aufeinanderfolgenden Schichten zu verkleinern und
- durch aufeinanderfolgende Schritte auf ähnliche Weise vorzugehen, bis mindestens für die letzten beiden Schichten, welche die gegebene Dicke des Substrats ausmachen, ein Schrittbetrag im Bereich von 1,6 mm bis 1,35 mm erreicht ist,
um zu erhalten:
FA - im Bereich von 40 % bis 52 % ± 2 bis 4,
FAz - im Bereich von 3 % bis 10 % ± 2
und
d/s - im Bereich von 1,85 mm bis 1,5 mm ± 0,05.

3. Verfahren nach einem der Ansprüche 1 und 2, **dadurch gekennzeichnet, daß** es darin besteht, ausgehend von zwei ersten übereinanderliegenden Schichten gegebener Dicke und für die folgenden 26 Schrittbeträge der Verschiebung ein Verschiebungsgesetz mit variablem Schrittbetrag, entsprechend einer Gesamtdicke auf der Basis von 28 Schichten definierter Dicke, einzusetzen.

4. Verfahren nach einem der Ansprüche 1 bis 3, **dadurch gekennzeichnet, daß** ausgehend von den folgenden Parametern:
| | |
|---|---|
| SD = | 30 Stiche/cm² ± 5, |
| EN = | 12,5 mm ± 0,5, |
| sM = | 1050 g/m² ± 50, |
| FA = | 40 % ± 2, |
| FAz = | 3 % ± 2 und |
| d/s = | 1,85 mm ± 0,05 |
nach dem Anbringen von zwei ersten Schichten definierter Dicke die folgenden Schrittbeträge der Verschiebung angewandt werden:
- drei Schrittbeträge der Verschiebung von 1,90 mm ± 0,05,
- fünf Schrittbeträge der Verschiebung von 1,80 mm ± 0,05,
- fünf Schrittbeträge der Verschiebung von 1,75 mm ± 0,05,
- fünf Schrittbeträge der Verschiebung von 1,70 mm ± 0,05,
- fünf Schrittbeträge der Verschiebung von 1,65 mm ± 0,05
und
- drei Schrittbeträge der Verschiebung von 1,60 mm ± 0,05.

5. Verfahren nach einem der Ansprüche 1 bis 3, **dadurch gekennzeichnet, daß** ausgehend von den folgenden Parametern:
| | |
|---|---|
| SD = | 30 Stiche/cm² ± 5, |
| EN = | 12 mm ± 0,5, |
| sM = | 1050 g/m² ± 50, |
| FA = | 41 % ± 3, |
| FAz = | 3 % ± 2 und |
| d/s = | 1,8 mm ± 0,05 |
nach dem Anbringen von zwei ersten Schichten definierter Dicke die folgenden Schrittbeträge der Verschiebung angewandt werden:
- zwei Schrittbeträge der Verschiebung von 1,80 mm ± 0,05,
- zehn Schrittbeträge der Verschiebung von 1,70 mm ± 0,05,
- sieben Schrittbeträge der Verschiebung von 1,60 mm ± 0,05,
- vier Schrittbeträge der Verschiebung von 1,55 mm ± 0,05
und
- drei Schrittbeträge der Verschiebung von 1,50 mm ± 0,05.

6. Verfahren nach einem der Ansprüche 1 bis 3, **dadurch gekennzeichnet, daß** ausgehend von den folgenden Parametern:
| | |
|---|---|
| SD = | 30 Stiche/cm² ± 5, |
| EN = | 12 mm ± 0,5, |
| sM = | 1050 g/m² ± 50, |
| FA = | 41 % ± 3, |
| FAz = | 3 % ± 2 und |
| d/s = | 1,8 mm ± 0,05 |
nach dem Anbringen von zwei ersten Schichten definierter Dicke die folgenden Schrittbeträge der Verschiebung angewandt werden:
- zwei Schrittbeträge der Verschiebung von 1,8 mm ± 0,05,
- zehn Schrittbeträge der Verschiebung von 1,7 mm ± 0,05,
- sieben Schrittbeträge der Verschiebung von 1,65 mm ± 0,05,
- vier Schrittbeträge der Verschiebung von 1,60 mm ± 0,05
und
- drei Schrittbeträge der Verschiebung von 1,55 mm ± 0,05.

7. Verfahren nach einem der Ansprüche 1 bis 3, **dadurch gekennzeichnet, daß** ausgehend von den folgenden Parametern:
| | |
|---|---|
| SD = | 45 Stiche/cm² ± 5, |
| EN = | 13,5 mm ± 0,5, |
| sM = | 1050 g/m² ± 50, |
| FA = | 48 % ± 4, |
| FAz = | 5 % ± 2 und |
| d/s = | 1,7 mm ± 0,05 |
nach dem Anbringen von zwei ersten Schichten definierter Dicke die folgenden Schrittbeträge der Verschiebung angewandt werden:
- zwölf Schrittbeträge der Verschiebung von 1,65 mm ± 0,05,
- sechs Schrittbeträge der Verschiebung von 1,55 mm ± 0,05
und
- acht Schrittbeträge der Verschiebung von 1,50 mm ± 0,05.

8. Verfahren nach einem der Ansprüche 1 bis 3, **dadurch gekennzeichnet, daß** ausgehend von den folgenden Parametern:
| | |
|---|---|
| SD = | 85 Stiche/cm² ± 5, |
| EN = | 13,5 mm ± 0,5, |
| sM = | 1050 g/m² ± 50, |
| FA = | 50 % ± 4, |
| FAz = | 8 % ± 2 und |
| d/s = | 1,55 mm ± 0,05 |
nach dem Anbringen von zwei ersten Schichten definierter Dicke die folgenden Schrittbeträge der Verschiebung angewandt werden:
- zwölf Schrittbeträge der Verschiebung von 1,60 mm ± 0,05,
- sechs Schrittbeträge der Verschiebung von 1,55 mm ± 0,05,
- vier Schrittbeträge der Verschiebung von 1,50 mm ± 0,05
und
- vier Schrittbeträge der Verschiebung von 1,45 mm ± 0,05.

9. Verfahren nach einem der Ansprüche 1 bis 3, **dadurch gekennzeichnet, daß** ausgehend von den folgenden Parametern:
| | |
|---|---|
| SD = | 90 Stiche/cm² ± 5, |
| EN = | 14 mm ± 0,5, |
| sM = | 1050 g/m² ± 50, |
| FA = | 52 % ± 4, |
| FAz = | 10 % ± 2 und |
| d/s = | 1,5 mm ± 0,05 |
nach dem Anbringen von zwei ersten Schichten definierter Dicke die folgenden Schrittbeträge der Verschiebung angewandt werden:
- fünf Schrittbeträge der Verschiebung von 1,60 mm ± 0,05,
- fünf Schrittbeträge der Verschiebung von 1,50 mm ± 0,05,
- fünf Schrittbeträge der Verschiebung von 1,45 mm ± 0,05,
- fünf Schrittbeträge der Verschiebung von 1,40 mm ± 0,05
und
- sechs Schrittbeträge der Verschiebung von 1,35 mm ± 0,05.
